# EUROPEAN PATENT SPECIFICATION

(11) **EP 4 480 919 B1**
(45) Date of publication and mention of the grant of the patent: **16.07.2025**
(21) Application number: 23180182.0
(22) Date of filing: 19.06.2023
(51) Int. Cl.: C01D 15/04, H01M 4/00

(54) **PROCESS FOR THE PRODUCTION OF BATTERY GRADE LITHIUM FLUORIDE**
VERFAHREN ZUR HERSTELLUNG VON LITHIUMFLUORID MIT BATTERIEQUALITÄT
PROCÉDÉ DE PRODUCTION DE FLUORURE DE LITHIUM DE QUALITÉ BATTERIE

(43) Date of publication of application: 25.12.2024
(73) Proprietor: Alkeemia S.p.A., 20121 Milano (MI) (IT)
(72) Inventor: ORSINI, Lorenzo Maria, 20121 Milano (IT); ROMIO, Matteo, 20121 Milano (IT); BITTOLO BON, Benedetta, 20121 Milano (IT); SACCO, Irene, 20121 Milano (IT); ANASTASIOU, Ioannis, 20121 Milano (IT)
(74) Representative: Gislon, Gabriele

(56) References cited:
- CN-A- 112 299 453
- US-A- 3 179 495
- LI HUAN ET AL: "Recovery of lithium from mineral resources: State-of-the-art and perspectives - A review", HYDROMETALLURGY, ELSEVIER SCIENTIFIC PUBLISHING CY. AMSTERDAM, NL, vol. 189, 11 August 2019 (2019-08-11), XP085876851, ISSN: 0304-386X, [retrieved on 20190811], DOI: 10.1016/J.HYDROMET.2019.105129

## Description

### FIELD OF INVENTION

The present invention relates to a process for manufacturing a lithium fluoride (LiF) suitable for use as intermediate in the production of lithium hexafluorophosphate (LiPF₆) to be employed in the formulation of electrolytes solutions for the rechargeable electric battery market. More specifically, the present invention relates to a process for the production of LiF using lithium compounds and fluorosilicic acid. The invention also relates to a method of recycling the fluorosilicic acid obtained as a by-product in industrial production processes.

### STATE OF THE ART

Lithium fluoride (LiF) is a key intermediate for the production of lithium hexafluorophosphate (LiPF₆), the most used lithium salt in the formulation of electrolytes solutions for lithium-ion batteries, which are the predominant battery type used in portable consumer electronics and electric vehicles. The LiPF₆ grade required for this specific technical application, is characterized by high purity standards (*i.e.,* battery grade) in order not to affect the battery performance. Generally, the purity grade of the components to be used in the relevant field have a purity grade > 99% and impurities in the ppm range. Therefore, for the production of such high purity material, it is mandatory, for technical and economic reasons, to work, along the production process, with high quality starting materials.

Currently, the production of LiPF₆ involves the use of hydrogen fluoride (HF) which is linked to some technical critical aspects. First of all, the hazardous chemical nature of HF has to be taken into account: HF is difficult to handle and requires specific authorizations for its use; furthermore, the HF source and the LiPF₆ production plant must be closely located, due to the difficulties related to HF shipping. Secondly, it is important to consider the fact that, as previously said, when the aim of the final synthesis is the production of LiPF₆ for the battery market, also the purity of the starting materials is a significant parameter that can influence the whole process.

The most common reaction for the production of LiPF₆ is:

PF₅ + LiF → LiPF₆

where PF₅ is usually produced starting from PCl₃ (a) or PCl₅ (b) as follow:
(a)

   PCl₃ + Cl₂ + 5HF → PF₅ + 5HCl

   or
(b)

   PCl₅ + 5HF → PF₅ + 5HCl
and LiF is usually produced using HF as follow:
(a')

   Li₂CO₃ + HF → LiF + CO₂ + H₂O

   Li₂CO₃ + CO₂ + H₂O → 2LiHCO₃

   2LiHCO₃ + 2HF → 2LiF + 2CO₂ + 2H₂O

   or
(b')

   LiOH + HF → LiF + H₂O.

Besides the above-mentioned technical difficulties, related to the extensive use of HF in the described reactions, it is also important to highlight the fact that fast growing market trends, such as the electric vehicles one, and the need for energy transition from hydrocarbon sources toward electric, can render the HF availability in Europe not sufficient to guarantee the local production and to fully support the emerging number of giga factories under construction.

US3241914 describes a production process of LiF from an aqueous LiOH solution, obtained following an elution with a strong base form an acid cation exchange resin, mixed with a soluble silicofluoride. Examples I-III report the addition of a slurry of LiOH monohydrate into a slurry of Na₂SiF₆, and the consequent production of a precipitate of LiF with a measured purity of around 90% and the presence of around 5% of Na₂SiF₆ and 0,5% of Li₂SiO₃. This purity grade and contaminants' presence, results in the LiF being not compatible with the subsequent use for the manufacture of LiPF₆ for electrolytes solutions of lithium-ion batteries.

CN112299453 discloses a method for preparing high-purity LiF by adding NH₄F to a lithium bicarbonate aqueous solution, obtained starting from lithium carbonate treated with gaseous CO₂, or by adding NH₄F to a solution obtained mixing lithium hydroxide and lithium formate.

Li Huan et al. (Hydrometallurgy, vol. 189, 11.08.2019) studies different methodologies for the lithium recovery from mineral sources. In particular, one possibility is the use of H₂SiF₆ and H₂SO₄ to generate HF in situ and precipitate LiF.

Therefore, the need for an improved process for the production of LiF, which does not imply the use of HF, is highly felt. In particular, it will be desirable to have an easy and reliable process able to produce LiF in a highly pure grade, suitable for the manufacture of LiPF₆ for electrolytes solutions of lithium-ion batteries (battery grade).

### OBJECTS OF THE INVENTION

It is an aim of the present invention to provide a new process for the production of LiF, in particular a highly pure LiF, *i.e.,* purity >99% (measured by X-ray diffraction, XRD, and Inductively Coupled Plasma Optical Emission spectroscopy, ICP-OES), suitable for being used in the synthesis of LiPF₆ for battery applications *(i.e.,* for the formulation of electrolytes solutions of lithium-ion batteries).

It is another object of the present invention to provide a method for recycling fluorosilicic acid (H₂SiF₆, FSA) as a by-product of hydrogen fluoride and fertilizers manufacturing process.

Those specific aims, together with other objects, are reached by the present invention's process claim 1 and recycling method claim 9.

### DESCRIPTION OF THE INVENTION

The present invention relates to a process for manufacturing a highly pure, battery grade, lithium fluoride (LiF) suitable for use as starting material in the production of lithium hexafluorophosphate (LiPF₆) to be employed in the formulation of electrolytes solutions for the rechargeable electric battery market. In particular, the present application concerns an alternative synthetic process, with respect to the currently used ones, which does not employ HF as main reagent and fluorine source.

With the expressions "highly pure" and "battery grade" material, it is intended to identify a chemical compound with a purity grade above 99%, preferably > 99.5%. In a preferred embodiment, impurities are present in the ppm range, preferably below 30 ppm for each impurity, more preferably below 15 ppm for each impurity.

Fluorosilicic acid (H₂SiF₆, FSA) is a by-product of different industries, in particular of HF manufacturing plants as well as of the production of water-soluble phosphate fertilizers. It is recovered in the form of aqueous solutions in variable concentrations, depending on the process itself, for example from 5% to 50% w/w. Due to currently in force, or under development legislations, related to the need of reducing environmental hazard and pollution, the release of FSA in the environment is not, or will not be, allowed anymore. The related industries are thus facing a change in the waste management policy, leading to a massive new availability on the market for FSA solutions which it would be beneficial to employ FSA in new processes, for examples as an alternative starting material compound. Use of FSA as a source of silica is known in the art.

The process of the present invention, for the manufacturing of battery grade LiF, involves the use of FSA solutions as alternative sources of fluorine.

The here described alternative process provides, with respect to the prior art, many advantages related, from one side, to the possibility of reducing waste and implement a circular economy process, by benefitting from an industrial by-product in the production of a high value component in the further production of electrolyte battery solutions. Moreover, by using FSA, it will be possible to design a manufacturing process for LiF with a significant improvement on the safety side, when compared to HF, and also to have more options of developing plants around the world, being able to easily transport the raw material (*i.e.,* the FSA). Another advantage of the production process of the present invention is the high flexibility regarding the source of LiF, by adding this new option to the ones already present in the prior art; furthermore, thanks to the present invention, the use of a high value chemical, i.e., HF, may be directed to other applications and replaced by a low-cost by-product for the manufacture of a valuable final product, such as LiF in the synthesis for LiPF₆ production.

The method of recycling a H₂SiF₆ solution deriving from industrial plants according to claim 9 is another object of the present invention.

A further object of the invention is a LiF according to claim 11.

In an aspect of the present invention, the FSA solution obtained as an industrial by-product as previously specified, and preferably from HF manufacturing process, can be directly employed in the process of the present invention without the need of further extensive purification steps, reducing costs, energy consumption and waste. Moreover, the use of 30-50% w/w FSA solutions obtained by the previously described processes, can help in reducing water consumption and optimizing the process productivity.

As disclosed in the experimental part of the present application, the new manufacturing process of the invention, has the technical results of producing a highly pure LiF, by providing a competitive yield > 90%, with the desirable battery grade characteristics of purity grade > 99%, necessary for its use as a starting material in the LiPF₆ production.

In particular, the process for the preparation of lithium fluoride (LiF) of the present invention comprises the following steps:
a) preparing a solution or a suspension, *i.e.,* including a slurry phase, comprising Li-X and a base;
b) heating said solution or suspension (a) at a temperature from 40°C to 90°C;
c) adding to said heated and stirred solution or suspension (b) a solution of H₂SiF₆ while maintaining the pH above 12.0 to obtain a LiF precipitate.

The component -X of step (a) is selected from -OH and a counterion of lithium in a lithium salt, preferably said -X is selected from -OH, -CO₃, -HCO₃, -Cl, and -SO₄, and the base is selected from LiOH, NaOH, KOH and NH₄OH.

The starting material Li-X for step (a) is, at least, a technical grade material with a purity grade about 98%.

In a preferred aspect of the present invention, the concentration by weight of the Li-X solution or suspension of step (a) is in the range from 5% to 30% w/w, preferably from 10% to 30% w/w, more preferably is 15% w/w. The possibility of using a higher concentration of the lithium solution represents a technical advantage, leading to the formation of a higher amount of the final product within a single reaction. The drawback related to this high concentration is the formation of a suspension containing a slurry of the Li-containing solid product which, in some processes, can be more difficult to handle, in particular when the reaction addition order of the starting materials imposes the pouring of the Li-X suspension/slurry into the reaction medium. The solution or suspension of step (a) of the present invention is characterized by a pH value above 12.0, preferably above pH 12.5, even more preferably in the pH range from 12.5 to 13.5.

According to an aspect of the present invention, the solution or suspension of step (a) is heated in step (b) at a preferred temperature in the range of 70°C to 85°C.

In a preferred aspect of the present invention, the concentration of the H₂SiF₆ solution in step (c) is within the range of 5% to 50% w/w, preferably from 10% to 40% w/w, more preferably from 30% to 40%.

According to a preferred aspect of the present invention, in step (c) the pH is maintained above the desired value of pH 12.0 thanks to the addition of a base, preferably selected from NaOH, KOH and NH₄OH. In particular, it is important to maintain the pH above 12.0 in order to avoid the precipitation of silica in the reaction media, which will constitute an undesired impurity in the final product. For this reason, if needed, the addition of the base, has to be done immediately after the end of the addition of the FSA solution.

Following the steps of the process of the present invention, it is important to remark the fact that the H₂SiF₆ solution of step (c) is added to the heated solution of step (b) and not vice-versa, *i.e.,* the heated solution of step (b) is not added to the H₂SiF₆ solution of step (c).

In a preferred aspect, the addition is a slow addition, for example a dropwise addition. In particular the addition rate of the H₂SiF₆ solution is a rate that results in the reaction temperature to be kept at the desired value, for example at 90°C or below 90°C, along the whole addition step. Preferably the temperature of the reaction mixture in step c) during the addition of FSA is in the range of 40°C to 90°C, more preferably 70°C to 90°C.

The order and the way of addition of the FSA component into the reaction mixture as recited in claim 1, is important to obtain a LiF having the required characteristics that make it a battery grade LiF. In particular, the claimed LiF precipitation in a reaction mixture containing a Lithium source LiX is a key aspect for the obtainment of a high purity product suitable for battery production.

The applicant found that the invention process' addition of FSA to a solution or suspension of a Lithium source, in the form of LiOH or a Lithium salt, results in a far greater purity of the thus obtained Lithium Fluoride, with respect to the LiF that is obtained from a process as in the prior art, *i.e.,* a process according to which the Li source (LiX) is added to an FSA solution or suspension.

As is known, metal impurities can vary according to the origin of the starting materials that originated the FSA; typically said metals are at least one of Fe, K, Na, Ca, Al, Si, Cu, Mg, Ni, Pb, Mn, V, Zn, Sr, Ti, Ba, Cd, Co, Cr, Hg.

According to embodiments of the process of the present invention, the addition of the H₂SiF₆ solution of step (c), preferably a slow addition, is made under continuous stirring. The stirring is carried out until the final product is fully precipitated, for example is carried out for a total time from 10 to 150 minutes, preferably from 15 to 120 minutes, preferably 1 hour.

By way of example only, and without limiting the scope of the present invention, here below are exemplified five possible basic reactions (1-5), according to the present invention, with their stoichiometric balance.

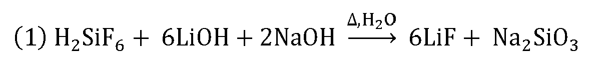

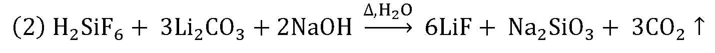

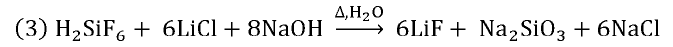

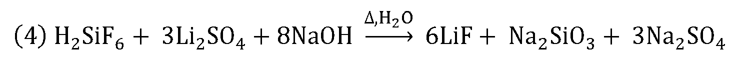

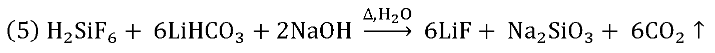

In a preferred aspect of the present invention, the process is carried out using, as H₂SiF₆ solution of step (c), a H₂SiF₆ solution obtained as a by-product of an industrial production, preferably in an industrial plant to produce HF or of water-soluble phosphate fertilizers. The applicant realized that FSA by-product can be used, for the process of the present invention, at the concentration in which it is formed during the industrial process from which it derives, or it can be further concentrated or diluted in order to reach the desired concentration. When possible, e.g., when the by-product H₂SiF₆ solution is obtained from HF production processes, the FSA solution is used directly, without the need of any pre-purification process.

Once obtained, the precipitated LiF product can be separated from the reaction medium with any known method. For example, but not limited to, the solid powder can be filtered from the warm suspension, washed one or multiple times with distilled water, and dried in a static oven at a temperature above 100°C, for example at 110°C, until a constant weight is reached, for example for 15 hours.

A further object of the present invention is a method for recycling a solution of H₂SiF₆ obtained as by-product from industrial processes, wherein said solution of H₂SiF₆ is added to a Li-X solution or suspension in a process according to the present invention as previously described. Said industrial processes are preferably selected from HF production and water-soluble phosphate fertilizers production. If needed or desired, one or more purification processes known by the skilled person, such as, for example but not limited to, a process selected from centrifugation, filtration, and extraction, can be performed prior to its addition to the heated solution or suspension of step (b). According to a preferred aspect, the method for recycling according to the present invention is related to a solution of H₂SiF₆ obtained as a by-product from an industrial process, in particular from synthesis of HF, and having a concentration from 5% to 50% by weight (w/w), preferably from 10% to 40% by weight, more preferably from 30% to 50% by weight.

In a further possible aspect, the by-product solution of H₂SiF₆ can be introduced in step (c) as previously described, without the need of an intermediate purification process.

The invention will be further described in the following experimental section, with reference to the following non-limiting examples.

### EXPERIMENTAL SECTION

### EXAMPLE 1 - Preparation of LiF from Li₂CO₃ (Reaction 2)

Li₂CO₃ tech. grade (10 g, 135 mmol) and 50% w/w NaOH solution (21.6 g, 270 mmol) were mixed in 80g of distilled water under continuous magnetic stirring to obtain a slurry. The system was then heated at 70°C and a solution of H₂SiF₆ (54 g, 45 mmol, 12% w/w) was added dropwise within 20 minutes. The reaction pH was continuously monitored and kept above pH 12.5 by addition of fresh 50% w/w NaOH solution, if needed. After 15 minutes, a precipitate of lithium fluoride was completely formed, and it was filtered from the warm suspension. The filtrate was washed twice with small portions of distilled water. The obtained product was dried for 15 hours at 110°C to give a white fine-powdered solid lithium fluoride (3.3 g, 128 mmol) with 95% yield. XRD (X-ray diffraction) and ICP-OES (Inductively Coupled Plasma Optical Emission spectroscopy) confirmed the purity of LiF for a battery application (i.e., >99%); the quantity of Al, As, Cu, Fe, Cr, Ni, Mn, K and Cd are all below 15 ppm each.

### EXAMPLE 2 - Preparation of LiF from LiOH (Reaction 1)

LiOH monohydrate tech. grade (10 g, 238 mmol) and 50% w/w NaOH solution (19.4 g, 242 mmol) were dissolved in 70g of distilled water under continuous magnetic stirring. The system was then heated at 70°C and a solution of H₂SiF₆ (48g, 40 mmol, 12% w/w) was added dropwise within 10 minutes. The reaction pH was continuously monitored and kept above pH 12.5 by addition of fresh 50% w/w NaOH solution, if needed. After 120 minutes, a precipitate of lithium fluoride was completely formed, and it was filtered from the warm suspension. The filtrate was washed twice with small portions of distilled water. The obtained product was dried for 15 hours at 110°C to give a white fine-powdered solid lithium fluoride (6.0g, 231 mmol) with 97% yield. XRD (X-ray diffraction) and ICP-OES (Inductively Coupled Plasma Optical Emission spectroscopy) confirmed the purity of LiF for a battery application. The quantity of Al, As, Cu, Fe, Cr, Ni, Mn, K and Cd are all below 15 ppm each.

### EXAMPLE 3 - Preparation of LiF from LiOH (Reaction 1)

LiOH monohydrate tech. grade (40 g, 953 mmol) and 50% w/w NaOH solution (25.4 g, 317 mmol) were suspended in 320 g of distilled water under continuous magnetic stirring. The system was then heated at 70°C and a solution of H₂SiF₆ (67.3 g, 159 mmol, 12% w/w) was added dropwise within 10 minutes. The reaction pH was continuously monitored and kept above pH 12.5 by addition of fresh 50% w/w NaOH solution, if needed. After 120 minutes, a precipitate of lithium fluoride was completely formed, and it was filtered from the warm suspension. The filtrate was washed twice with small portions of distilled water. The obtained product was dried for 15 hours at 110° to give a white fine-powdered solid lithium fluoride (23.5 g, 123 mmol) with 94% yield. XRD (X-ray diffraction) and ICP-OES (Inductively Coupled Plasma Optical Emission spectroscopy) confirmed the purity of LiF for a battery application. The quantity of Al, As, Cu, Fe, Cr, Ni, Mn, K and Cd are all below 15 ppm each.

### EXAMPLE 4 - Preparation of LiF from Li₂CO₃(Reaction 2)

Li₂CO₃ tech. grade (10 g, 135 mmol) and 50% w/w NaOH solution (21.6 g, 270 mmol) were mixed in 80g of distilled water under continuous magnetic stirring to obtain a slurry. The system was then heated at 85°C and a solution of H₂SiF₆ (54g, 45 mmol, 12% w/w) was added dropwise within 20 minutes. The reaction pH was continuously monitored and kept above pH 12.5 by addition of fresh 50% w/w NaOH solution, if needed. After 15 minutes, a precipitate of lithium fluoride was completely formed, and it was filtered from the warm suspension. The filtrate was washed twice with small portions of distilled water. The obtained product was dried for 15 hours at 110°C to give a white fine-powdered solid lithium fluoride (3.2 g, 123 mmol) with 91% yield. XRD (X-ray diffraction) and ICP-OES (Inductively Coupled Plasma Optical Emission spectroscopy) confirmed the purity of LiF for a battery application. The quantity of Al, As, Cu, Fe, Cr, Ni, Mn, K and Cd are all below 15 ppm each.

### EXAMPLE 5 - Preparation of LiF from LiOH (Reaction 1)

LiOH monohydrate tech. grade (40 g, 953 mmol) and 50% w/w NaOH solution (56 g, 700 mmol) were suspended in 320 g of distilled water under continuous magnetic stirring. The system was then heated at 80°C and a solution of H₂SiF₆ (68.3 g, 159 mmol, 34% w/w) was added dropwise within 10 minutes. The reaction pH was continuously monitored and kept above pH 12.5 by addition of fresh 50% w/w NaOH solution, if needed. After 60 minutes, a precipitate of lithium fluoride was completely formed, and it was filtered from the warm suspension. The filtrate was washed twice with small portions of distilled water. The obtained product was dried for 15 hours at 110°C to give a white fine-powdered solid lithium fluoride (27 g, 948.5 mmol) with 99.5% yield. XRD (X-ray diffraction) and ICP-OES (Inductively Coupled Plasma Optical Emission spectroscopy) confirmed the purity of LiF for a battery application. The quantity of Al, As, Cu, Fe, Cr, Ni, Mn, K and Cd are all below 15 ppm each.

### EXAMPLE 6 - Comparison Preparation of LiF from Li₂CO₃ (Reaction 2)

Li₂CO₃ tech. grade (10 g, 135 mmol) and 50% w/w NaOH solution (7.2 g, 90 mmol) were suspended in 80g of distilled water under continuous magnetic stirring. The suspension was then added dropwise within 20 minutes to a solution of H₂SiF₆ (18.4 g, 45 mmol, 35% w/w) under stirring at 60°C. The pH of the solution after addition of Li₂CO₃ and NaOH was continuously monitored and kept above pH 12.5 by addition of fresh 50% w/w NaOH solution (30 g). After 60 minutes under stirring, a precipitate of lithium fluoride was completely formed, and it was filtered from the warm suspension. The filtrate was washed twice with small portions of distilled water. The obtained product was dried for 15 hours at 110°C to give a white fine-powdered solid lithium fluoride (6.1 g, 234 mmol) with 86% yield. XRD (X-ray diffraction) and ICP-OES (Inductively Coupled Plasma Optical Emission spectroscopy) confirm the fact that this preparation method, not-according to the present invention, is not suitable for the production of the desired purity (battery) grade of the final LiF product. In fact, the obtained LiF is not suitable for battery application, because all the relevant metal impurities result to be too high for the desired use. In particular, the measured quantity of Al was 442 ppm, of Fe 159 ppm, of K 195 ppm and of Cr 37 ppm.

## Claims

1. A process for the preparation of lithium fluoride, LiF, comprising the following steps:
a) preparing a solution or a suspension comprising Li-X and a base, where -X is selected from -OH, -CO₃, -HCO₃, -Cl and -SO₄, said solution or suspension having a pH above 12.0, preferably a pH from 12.5 to 13.5;
b) heating said solution or suspension (a) at a temperature from 40°C to 90°C, preferably from 70°C to 85°C;
c) adding to said heated and stirred solution or suspension (b) a solution of H₂SiF₆ while maintaining the pH above 12.0, preferably above pH 12.5, to obtain a LiF precipitate.

2. The process, according to claim 1, **characterized in that** the concentration of said Li-X in said solution or suspension of step (a) is within the range of 5% to 30% by weight, preferably from 10% to 30% by weight.

3. The process according to any one of the preceding claims, **characterized in that** said base in step (a) is selected from LiOH, NaOH, KOH and NH₄OH.

4. The process according to any one of the preceding claims, **characterized in that** in step (c) the pH is maintained above pH 12.0 by the addition of a base selected from NaOH, KOH and NH₄OH.

5. The process according to any one of the preceding claims, **characterized in that** the concentration of said H₂SiF₆ solution of step (c) is in the range from 5% to 50% by weight, preferably from 5% to 40% by weight.

6. The process according to any one of the preceding claims, **characterized in that** said H₂SiF₆ solution of step (c) is added to the heated solution or suspension (b) at a rate such as that the temperature of said solution or suspension is 90°C or below, preferably in the range of 40°C to 90°C, more preferably 70°C to 90°C.

7. The process according to any one of the preceding claims, **characterized in that** said stirring of step (c) is carried out for a time from 10 to 150 minutes, preferably from 15 to 120 minutes.

8. The process according to any one of the preceding claims, **characterized in that** said H₂SiF₆ solution of step (c) is a by-product of an industrial process, preferably an industrial process for the production of HF or of water-soluble phosphate fertilizers.

9. A method for recycling a solution of H₂SiF₆ obtained as by-product from an industrial production process, preferably said process being selected from HF production and water-soluble phosphate fertilizers production, wherein said H₂SiF₆ solution is added to a Li-X solution or suspension in a process according to any one of claims 1 to 7.

10. The recycling method according to claim 9, wherein said by-product H₂SiF₆ solution is at a concentration from 5% to 50% w/w, preferably from 5% to 40% w/w.

11. LiF obtained by the process according with any one of claims 1 to 8, **characterized by** a purity grade above 99%, preferably above 99,5% and by a content of Al, As, Cu, Fe, Cr, Ni, Mn, K and Cd equal or below 30 ppm each.

## Patentansprüche

1. Ein Verfahren zur Herstellung von Lithiumfluorid, LiF, umfassend die folgenden Schritte:
a) Herstellen einer Lösung oder Suspension, die Li-X und eine Base umfasst, wobei - X aus -OH, -CO₃, -HCO₃, -CI und -SO₄ ausgewählt ist, wobei die Lösung oder Suspension einen pH-Wert über 12,0, vorzugsweise einen pH-Wert im Bereich von 12,5 bis 13,5, aufweist;
b) Erwärmen der Lösung oder einer Suspension (a) auf eine Temperatur von 40°C bis 90°C, vorzugsweise von 70°C bis 85°C;
c) Zugeben einer Lösung von H₂SiF₆ zu der erwärmten und gerührten Lösung oder Suspension (b) unter Beibehaltung des pH-Werts über 12,0, vorzugsweise über pH 12,5, um einen LiF-Niederschlag zu erhalten.

2. Das Verfahren nach Anspruch 1, **dadurch gekennzeichnet, dass** die Konzentration des Li-X in der Lösung oder Suspension aus Schritt (a) im Bereich von 5 Gew.-% bis 30 Gew.-%, vorzugsweise im Bereich von 10 Gew.-% bis 30 % Gew.-%, liegt.

3. Das Verfahren nach einem der vorhergehenden Ansprüche, **dadurch gekennzeichnet, dass** die in Schritt (a) verwendete Base aus LiOH, NaOH, KOH und NH₄OH ausgewählt ist.

4. Das Verfahren nach einem der vorhergehenden Ansprüche, **dadurch gekennzeichnet, dass** in Schritt (c) der pH-Wert durch Zugabe einer Base, ausgewählt aus NaOH, KOH und NH₄OH, über pH 12,0 gehalten wird.

5. Das Verfahren nach einem der vorhergehenden Ansprüche, **dadurch gekennzeichnet, dass** die Konzentration der Lösung von H₂SiF₆ in Schritt (c) im Bereich von 5 Gew.-% bis 50 Gew.-% liegt, vorzugsweise im Bereich von 5 Gew.-% bis 40 Gew.-%.

6. Das Verfahren nach einem der vorhergehenden Ansprüche, **dadurch gekennzeichnet, dass** die Lösung von H₂SiF₆ in Schritt (c) in einer Geschwindigkeit zu der erwärmten Lösung oder Suspension (b) zugegeben wird, so dass die Temperatur der Lösung oder Suspension bei 90°C oder darunter, vorzugsweise im Bereich von 40°C bis 90°C, bevorzugter im Bereich von 70°C bis 90°C liegt.

7. Das Verfahren nach einem der vorhergehenden Ansprüche, **dadurch gekennzeichnet, dass** das Rühren in Schritt (c) für eine Dauer von 10 bis 150 Minuten durchgeführt wird, vorzugsweise für eine Dauer von 15 bis 120 Minuten.

8. Das Verfahren nach einem der vorhergehenden Ansprüche, **dadurch gekennzeichnet, dass** die Lösung von H₂SiF₆ in Schritt (c) ein Nebenprodukt eines industriellen Verfahrens ist, vorzugsweise eines industriellen Verfahrens zur Herstellung von HF oder von wasserlöslichen Phosphatdüngemitteln.

9. Ein Verfahren zum Recycling einer als Nebenprodukt bei einem industriellen Herstellungsprozess gewonnenen Lösung von H₂SiF₆, wobei es sich vorzugsweise um ein Verfahren handelt, das aus der Herstellung von HF oder von wasserlöslichen Phosphatdüngemitteln ausgewählt ist, wobei die Lösung von H₂SiF₆ in einem Verfahren nach einem der Ansprüche 1 bis 7 zu einer Li-X-Lösung oder -Suspension zugegeben wird.

10. Das Recyclingverfahren nach Anspruch 9, wobei die Nebenprodukt-H₂SiF₆-Lösung eine Konzentration von 5 Gew.-% bis 50 Gew.-%, vorzugsweise von 5 Gew.-% bis 40 Gew.-%, aufweist.

11. LiF, das durch das Verfahren nach einem der Ansprüche 1 bis 8 gewonnen wurde, **gekennzeichnet durch** einen Reinheitsgrad von über 99 %, vorzugsweise über 99,5 %, und durch einen Gehalt an Al, As, Cu, Fe, Cr, Ni, Mn, K und Cd, der jeweils gleich oder unter 30 ppm liegt.

## Revendications

1. Procédé de préparation de fluorure de lithium, LiF, comprenant les étapes suivantes :
a) préparer une solution ou une suspension comprenant Li-X et une base, où -X est choisi parmi -OH, -CO₃, -HCO₃, -CI et -SO₄, ladite solution ou suspension ayant un pH supérieur à 12,0, de préférence un pH de 12,5 à 13,5 ;
b) chauffer ladite solution ou suspension (a) à une température comprise entre 40°C et 90°C, de préférence entre 70°C et 85°C ;
c) ajouter à ladite solution ou suspension (b) chauffée et agitée une solution de H₂SiF₆ tout en maintenant le pH au-dessus de 12,0, de préférence au-dessus de 12,5, pour obtenir un précipité de LiF.

2. Procédé selon la revendication 1, **caractérisé en ce que** la concentration dudit Li-X dans ladite solution ou suspension de l'étape (a) est comprise entre 5 % et 30 % en poids, de préférence entre 10 % et 30 % en poids.

3. Procédé selon l'une quelconque des revendications précédentes, **caractérisé en ce que** la base de l'étape (a) est choisie parmi LiOH, NaOH, KOH et NH₄OH.

4. Procédé selon l'une quelconque des revendications précédentes, **caractérisé en ce qu'**à l'étape (c) le pH est maintenu au-dessus de pH 12,0 par l'addition d'une base choisie parmi NaOH, KOH et NH₄0H.

5. Procédé selon l'une quelconque des revendications précédentes, **caractérisé en ce que** la concentration de ladite solution H₂SiF₆ de l'étape (c) est comprise entre 5 % et 50 % en poids, de préférence entre 5 % et 40 % en poids.

6. Procédé selon l'une quelconque des revendications précédentes, **caractérisé en ce que** ladite solution H₂SiF₆ de l'étape (c) est ajoutée à la solution ou suspension (b) chauffée à une taux telle que la température de ladite solution ou suspension est inférieure ou égale à 90°C, de préférence comprise entre 40°C et 90°C, plus préférentiellement entre 70°C et 90°C.

7. Procédé selon l'une quelconque des revendications précédentes, **caractérisé en ce que** ladite agitation de l'étape (c) est effectuée pendant une durée allant de 10 à 150 minutes, de préférence de 15 à 120 minutes.

8. Procédé selon l'une quelconque des revendications précédentes, **caractérisé en ce que** ladite solution H₂SiF₆ de l'étape (c) est un sous-produit d'un procédé industriel, de préférence un procédé industriel de production de HF ou d'engrais phosphatés solubles dans l'eau.

9. Méthode de recyclage d'une solution de H₂SiF₆ obtenue comme sous-produit d'un procédé de production industrielle, de préférence ledit procédé étant choisi parmi la production de HF et la production d'engrais phosphatés solubles dans l'eau, dans lequel ladite solution de H₂SiF₆ est ajoutée à une solution ou à une suspension de Li-X dans un procédé selon l'une quelconque des revendications 1 à 7.

10. Méthode de recyclage selon la revendication 9, dans lequel ladite solution de H₂SiF₆ sous-produit est à une concentration de 5 % à 50 % en poids, de préférence de 5 % à 40 % en poids.

11. LiF obtenu par le procédé selon l'une quelconque des revendications 1 à 8, **caractérisé par** un degré de pureté supérieur à 99%, de préférence supérieur à 99,5% et par une teneur en AI, As, Cu, Fe, Cr, Ni, Mn, K et Cd égale ou inférieure à 30 ppm chacun.
